# EUROPEAN PATENT APPLICATION

(11) **EP 4 760 261 A1**
(43) Date of publication of application: **17.06.2026**
(21) Application number: 24219565.9
(22) Date of filing: 12.12.2024
(51) Int. Cl.: G01N 35/00, G01N 35/10

(54) **AUTOMATED LABORATORY INSTRUMENT**

(71) Applicant: Roche Diagnostics International AG, 6343 Rotkreuz (CH)
(72) Inventor: MEIER, Jaroslaw Maciej, 6343 Rotkreuz (CH); ELGI, Florian, 6343 Rotkreuz (CH)
(74) Representative: Mewburn Ellis LLP

(57) **Abstract**

An automated laboratory instrument is provided for analysing biological samples. The automated laboratory instrument comprises a controller for coordinating the automated laboratory instrument, wherein the controller is configured to: cause the automated laboratory instrument to execute one or more processing runs, each processing run comprising one or more protocols to carry out on each of the biological samples; monitor a total number of processing runs completed by the laboratory instrument; and trigger an instrument maintenance routine to be performed on the automated laboratory instrument when the total number of processing runs exceeds a predetermined run threshold.

## Description

### Field of the Disclosure

The present disclosure relates to an automated laboratory instrument, a computer-implemented method, and a computer-readable storage medium.

### Background

In analytical laboratories, and in particular in-vitro diagnostic laboratories, one or more automated laboratory instruments may perform pre-analytical, analytical, and post-analytical protocols on biological samples.

It is important to perform preventative maintenance on automated analytical instruments to ensure that they are operating correctly and to extend a lifetime of the instrument. Maintenance routines typically comprise a plurality of activities including checking, cleaning, and replacing various components (e.g., fan filters and filter fluid) or resources in the instrument.

These activities are typically manually performed, although automated maintenance activities may also be performed, after some set up has been performed by a user or a confirmation signal has been provided by a user. Each activity may become due at a different time and can be very laborious for users to perform which leads to maintenance being delayed or neglected.

Traditionally, maintenance routines are scheduled using a time-based and offline approach wherein a user will keep track of and perform maintenance activities after a predetermined period of time in scheduled appointment. However, such an approach can lead to excessive downtime for the instruments, by scheduling maintenance too often, or to excessive ware and breakdown of the instrument if it has been subject to heavy use and maintenance has not been performed often enough. Additionally, traditional methods for scheduling maintenance require a user to manually log which activities have been performed. Accordingly, there is a desire for an improved method of scheduling preventative maintenance of laboratory instruments.

The present invention has been devised in light of the above considerations.

### Summary of the Invention

Broadly, the present disclosure provides an automated laboratory instrument which is configured to schedule preventative maintenance activities according to an amount of usage of the automated laboratory instrument. Further, in some examples, preventative maintenance activities may be scheduled according to the usage of respective assets of the automated laboratory instrument so as to schedule maintenance activities of the respective assets to coincide with each other.

Accordingly, there is provided, in a first aspect, an automated laboratory instrument for analysing biological samples. The automated laboratory instrument comprising a controller for coordinating the automated laboratory instrument, wherein the controller is configured to: cause the automated laboratory instrument to execute one or more processing runs, each processing run comprising one or more protocols to carry out on each of the biological samples, and trigger a maintenance routine to be performed on the automated laboratory instrument. Furthermore, the controller is configured to monitor a number of processing runs completed by the laboratory instrument and trigger the maintenance routine when the number of processing runs exceeds a predetermined run threshold.

Advantageously, preventative maintenance of the automated laboratory instrument can be timed for when it is needed rather than too frequently or not enough thereby reducing downtime of the automated laboratory instrument whilst reducing a likelihood of the instrument breaking down or experiencing a blockage.

The automated laboratory instrument (e.g., analytical system) may be an automated molecular work area for performing IVD (in vitro diagnostic) tests on biological samples such as Polymerase Chain Reaction (PCR) based Nucleic Acid Testing (NAT). The automated laboratory instrument may comprise an onboard storage and refrigeration system to enable ready access and maintain an inventory of consumables and reagents for performing the tests.

The controller may be a processor or system manager configured to receive test orders, determine workflows for fulfilling each of the test orders, and configured the automated laboratory instrument to perform the workflows. For example, the controller may receive status information about the testing hardware, consumables, and reagents of automated laboratory instrument so as to determine an efficient workflow from sample processing to result interpretation.

Each processing run may comprise one or more, or preferably a plurality of test orders, to be completed by the automated laboratory instrument, or by a module of the laboratory instrument.

Periodically, execution of the processing runs may be postponed so that preventative maintenance can be performed on the automated laboratory instrument. The maintenance routine scheduled and triggered by the controller may include a plurality of maintenance activities to be performed on the automated laboratory instrument. Each maintenance routine may be referred to as a maintenance package comprising a plurality of maintenance activities. By triggering a plurality of maintenance activities all at once in this way, the overall down time of the instrument can be reduced thus increasing the overall throughput of the instrument.

The maintenance activities may include any one or more: checking, cleaning, replacing, treating, lubricating, etc one or more assets of the laboratory instrument. The assets may include testing hardware of the automated laboratory instrument and/or consumables such as reagents, filter fluid, or needles. The maintenance routine may be accepted and/or performed by a user of the automated laboratory instrument.

Triggering the maintenance routine may include generating a notification that maintenance is due. For example, the notification may be a user notification displayed on a user interface or the automated laboratory instrument or the notification may be transmitted to a remote computer system for processing. Therefore, the predetermined run threshold may be referred to as a due threshold indicating that maintenance is due to be performed.

The number of processing runs may be a total number of processing runs completed by (all modules of) the automated laboratory instrument. Therefore, the triggered maintenance routine may be an instrument maintenance routine which, for example, may comprise maintenance activities for the automated laboratory instrument as a whole. In this example, the predetermined run threshold may be referred to as an instrument run threshold.

Alternatively, the number of processing runs may be a number of processing runs completed by a module of the automated laboratory instrument and the triggered maintenance routine may be a module maintenance routine to be performed on the module. In this example, the predetermined run threshold may be referred to as a module run threshold.

The controller may comprise an instrument run counter for monitoring the total number of processing runs completed by the laboratory instrument. The predetermined threshold number of processing runs may therefore be referred to as a counter threshold or an instrument counter threshold.

As discussed below, the controller may comprise one or more counters, each counter configured to monitor a number of runs completed by a respective asset of the laboratory instrument. An asset may include a module or unit of the automated laboratory instrument, or the laboratory instrument as a whole. Each counter may be associated with a common or respective predetermined run threshold, which when exceeded by the one of the counter causes a maintenance routine for performing on the asset associated with that counter to be performed.

The predetermined threshold number of processing runs may be a first threshold (e.g., a due threshold) which indicates when a respective maintenance routine is due. Additionally, the controller may be configured to determine when the number of processing runs has exceeded a second predetermined threshold number of processing runs (e.g., an overdue threshold) which is higher than the first threshold. The second threshold may indicate when the respective maintenance threshold is overdue. Thus, the automated laboratory instrument may be operated in a default state, a due state, or an overdue state depending if and on which thresholds have been exceeded.

The automated laboratory instrument may comprise a plurality of modules (or sub-modules or units) for executing the one or more processing runs. For example, each module may include one or more pipette heads of the laboratory instrument.

As mentioned above, the controller may be further configured to monitor a respective number of processing runs completed by one or more of (or each module of the automated laboratory instrument. When the respective number of processing runs exceeds a predetermined module run threshold, the controller may be configured to trigger a module maintenance routine to be performed on that module. For example, the controller may be configured to send a notification to a user interface or a remote system indicating that maintenance on that module is due.

Triggering the instrument maintenance routine, and/or optionally each module maintenance routine, may comprise generating a signal indicating that maintenance is due. For example, triggering the maintenance routine may comprise one or more of: generating a user notification indicating that maintenance is due, starting an automated maintenance routine, and/or transmitting a notification to remote service.

The controller may be configured to reset the monitored number of processing runs upon detecting that the instrument maintenance protocol (or the respective module maintenance routine) has been performed. For example, the controller may be configured to reset the one or more run counters (e.g., the instrument run counter and/or the respective module run counters).

As mentioned above, the or each predetermined run threshold may be a first predetermined run threshold. The controller may then be further configured to: determine when the total or respective number of processing runs has exceeded a second predetermined run threshold (e.g., an overdue threshold) which is higher than the first predetermined run threshold. When it is determined that a monitored number of runs has exceeded a second predetermined threshold, the controller may be configured to prevent or reduce operation of the automated laboratory instrument until the triggered maintenance routine is performed. For example, if the total number of runs has exceeded an instrument run overdue threshold, the controller may be configured to lock the automated laboratory instrument to prevent further use until the instrument maintenance routine has been performed. In contrast, if a respective number of runs completed by a module has exceeded a respective overdue threshold number of runs, then the controller may be configured to reduce and allowed usage of the automated laboratory instrument.

After determining that the first predetermined run threshold has been exceeded, the controller may be configured to retrieve an extension key from a remote service upon detecting a user request for an extension. The controller may then use the extension key to extend (e.g., increase) the second predetermined run threshold. Accordingly, a user may be allowed more time and/or more runs to be performed before the maintenance routine is determined to be overdue and, optionally, the automated laboratory instrument is locked.

The or each predetermined run threshold may be a static value retrievable from a configuration file of the automated laboratory instrument. The configuration file may be editable offline. That is, the configuration file may be downloaded to a separate location, edited, and then re-uploaded to be read by the controller. In this way, changing the threshold values can be performed using a low impact software update which is convenient and efficient. The configuration file may comprise static values for the due threshold and/or the overdue threshold for the instrument maintenance routine and/or the module maintenance routines.

The predetermined run threshold may be determined based on historical performance information. The historical performance information may have been recorded when the automated laboratory equipment is subject to low and/or average and/or high throughputs. The or each (first) predetermined run threshold may be selected from a range defined by: a historical number of runs completed between maintenance routines when the automated laboratory equipment is subject to a low throughput, and the historical number of runs completed between maintenance routines when the automated laboratory equipment is subject to an average throughput. The historical number of runs completed between maintenance routines may refer to a number of runs that could be completed until a state of the automated laboratory instrument dictated that a maintenance routine should be performed.

Each predetermined module threshold may be configured to be exceeded when the predetermined instrument threshold is exceeded. Accordingly, the triggering of each module maintenance routine may be configured to coincide with the or a triggering of the instrument maintenance routine. In this way, downtime of the automated laboratory instrument may be reduced by ensuring that module maintenance can be performed at the same time as instrument level maintenance. The controller may be configured to balance a workload of each module when assigning runs to each module. Accordingly, the controller may then be configured to trigger the instrument run routine every x runs completed by the instrument, and trigger a module maintenance routine every x/n runs completed by that module, wherein n is a number of modules across which the workload is divided.

The triggered instrument maintenance routine may be one of a plurality of instrument maintenance routines or maintenance packages selectable by the controller. Each of the plurality of instrument maintenance routines may correspond to a respective level of maintenance to be performed. For example, higher level maintenance routines may include a higher number of maintenance activities and/or require larger amounts of time and/or resources to perform than lower level maintenance routines. For example, the plurality of maintenance routines may be referred to as a menu or selection of packages and, optionally, include small, medium, and large packages of maintenance activities.

For example, the plurality of maintenance routines may include at least: a lower level maintenance routine which includes checking an instrument asset, and a higher level maintenance routine which includes replacing said instrument asset.

The controller may be configured to select the instrument maintenance routine for triggering based on a schedule (e.g., sequence) of instrument maintenance routines.

The schedule of instrument maintenance routines may be configured to ensure that a higher level maintenance routine is performed only after one or more lower level maintenance routines have been performed. For example, the schedule of instrument maintenance routines may alternate levels of maintenance routines or schedule lower level maintenance routines more often the higher level maintenance routines, etc.

In a further aspect, the present disclosure provides a computer-implemented method of triggering maintenance of an automated laboratory instrument, the automated laboratory instrument being configured to execute one or more processing runs, each processing run comprising one or more protocols to carry out on each of the biological samples, wherein the method comprises: monitoring a total number of processing runs completed by the laboratory instrument, and, triggering an instrument maintenance routine to be performed on the automated laboratory instrument when the total number of processing runs exceeds a predetermined run threshold.

The computer-implemented method may be performed by a controller of the automated laboratory instrument. Accordingly, the computer-implemented method may comprise any of the optional features discussed herein in respect of the first aspect.

A further aspect of the present disclosure provides a computer-readable medium comprising instructions which when executed by a computer, cause the computer to perform any of the computer-implemented methods discussed herein.

Additional aspects of the present disclosure may relate to systems configured to execute any of the computer-implemented methods discussed in the present disclosure. Specifically, the system may comprise a processor which is configured to execute any of the computer-implemented methods of the present disclosure.

Additional aspects of the present disclosure may provide a computer program comprising instructions which, when the program is executed by a computer, cause the computer to carry out the steps of any computer-implemented method disclosed herein. Further aspects of the invention may provide a computer-readable storage medium, having stored thereon, the computer program of the previous aspects of the disclosure.

The present disclosure includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
Fig. 1 shows a diagram of an automated laboratory instrument;
Fig. 2 shows a diagram of a controller of the automated laboratory instrument;
Fig. 3 shows a flow diagram of a method performed by the controller for scheduling preventative maintenance;
Fig. 4 shows a more detailed flow diagram of a method performed by the controller;
Fig. 5 shows an example schedule for packages of planned maintenance activities;
Fig. 6 shows examples of maintenance intervals;
Fig. 7 shows examples of maintenance activities;
Fig. 8 shows examples of execution sequence for preventive maintenance packages;
Fig. 9 shows example maintenance intervals for performing instrument and module maintenance routines;
Fig. 10 shows a comparison between instrument and module maintenance schedules;
Fig. 11 shows a diagram of an example maintenance schedule; and
Fig. 12 shows a diagram of an overdue threshold being extended.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

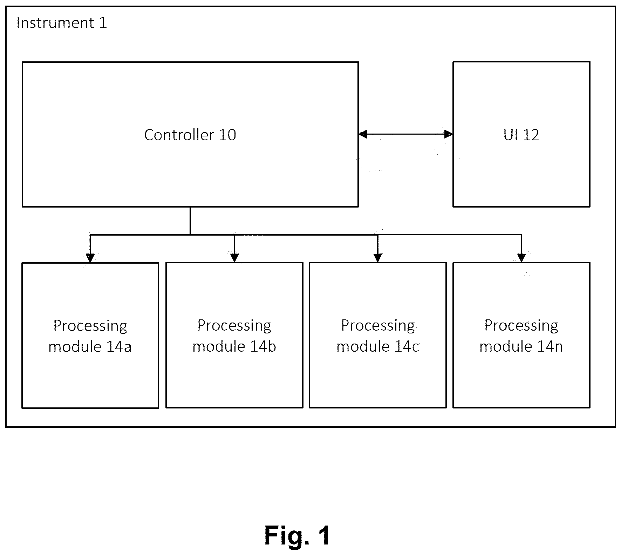

Fig.1 shows a diagram of an automated laboratory instrument 1 for performing pre-analytical, analytical, and post-analytical procedures on biological samples.

The automated laboratory instrument 1 comprises a controller 10 for coordinating the automated laboratory instrument 1 to execute one or more processing runs. Each processing run comprises one or more protocols to carry out on a plurality of biological samples. The controller 10 is configured to receive a series or test orders setting out tests to be performed on each biological sample and then determine a workflow for processing those test orders.

Additionally, the automated laboratory instrument 1 comprises a plurality of modules 14a-n for carrying out the processing runs. For example, each module may include one or more p-head units (also known as processing heads or pipettors) for processing the biological samples. As part of the workflow, the controller 10 is configured to assign a processing run to one or more of the p-head units. Preferably, the controller 10 is configured to balance the workload of each module 14n by distributing the processing runs evenly between modules 14n. This way, preventative maintenance required for each module 14n will be needed at the same frequency as they are subject to a similar amount of usage.

Finally, the automated laboratory interface comprises a Ul 12 (user interface) for communicating with and receiving instructions from a user. For example, the Ul may be configured to display a notification indicating when maintenance is due for the automated laboratory instrument 1 and/or one of the modules 14n.

As well as coordinating the laboratory instrument 1 to perform processing runs, the controller 10 is configured to monitor a total number of processing runs completed by the laboratory instrument 1 using a run counter and to trigger an instrument maintenance routine to be performed on the automated laboratory instrument 1 when the total number of processing runs exceeds a predetermined run threshold. For example, the controller 1 may trigger the maintenance routine to be performed by sending a notification to the UI 12 to inform a user that preventative maintenance is due to be performed on the instrument 1.

Additionally, the controller may be configured to monitor a respective number of processing runs completed by each module 14n and, when the respective number of processing runs exceeds a predetermined module run threshold, trigger a module maintenance routine to be performed on that module 14n. As discussed in detail below, the controller 10 is configured to set each of the thresholds so that, preferably, the instrument maintenance routine and one of more module maintenance routines are performed concurrently.

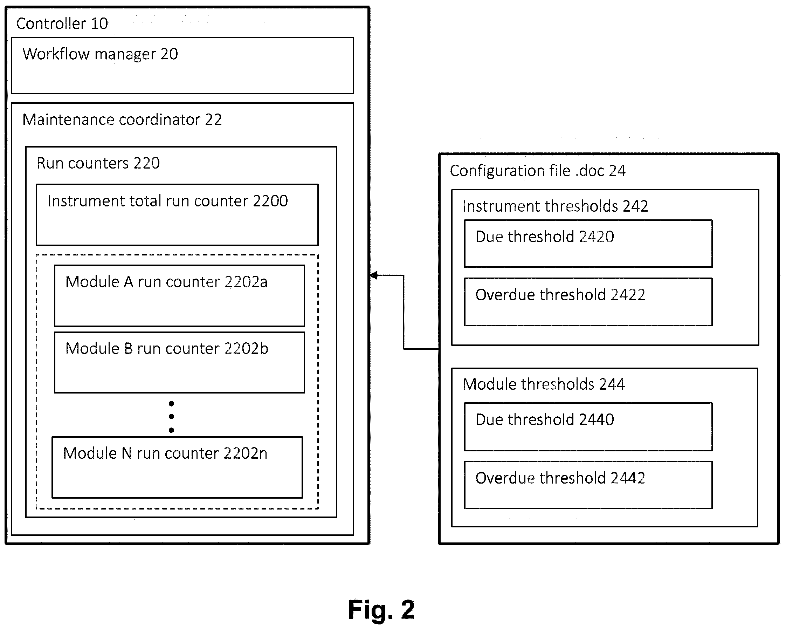

Fig. 2 shows a diagram of a controller 10 of the automated laboratory instrument 1. The controller 10 includes various functional modules for coordinating and controlling the automated laboratory instrument 1.

In this context, the term "module" is used to refer to a functional module which is configured or adapted to execute a particular function. The modules (e.g., the counters) may be implemented in hardware (i.e. they may be separate physical components within a computer), in software (i.e. they may represent separate sections of code, which when executed by a processor, cause the processor to perform a particular function), or in a combination of both.

The controller 10 comprises a workflow manager 20 for determining processing runs for each module 14n of the automated laboratory instrument 1 according to test orders received at the instrument 10, and a maintenance coordinator module 22 for scheduling preventative maintenance to be performed on the instrument 1.

The maintenance coordinator 22 comprises a plurality of run counters 220 for monitoring a respective number of processing runs completed by a respective asset of the automated laboratory instrument 1 since a last maintenance routine was performed on that asset. In particular, the run counters 220 include an instrument run counter 2200 for monitoring a total number of processing runs completed by the instrument 1, and a plurality of module run counters 2202n, each module run counter 2202n for monitoring a respective number of processing runs completed by a respective module 14n of the automated laboratory instrument 1.

The controller 10 has read access to a configuration file 24, e.g., stored in non-volatile memory of the automated laboratory instrument or stored remotely. The configuration file 24 includes instrument maintenance thresholds 242 for scheduling maintenance for the automated laboratory instrument 1 and module maintenance thresholds 244 for scheduling maintenance for the modules 14a of the automated laboratory instrument 1.

The instrument 242 and module 244 maintenance thresholds each include a first, due threshold 2420, 2440 which is number of processing runs indicating when maintenance is now due to be performed. Additionally, the instrument 242 and module 244 maintenance thresholds each include a second, overdue threshold 2422, 2442 which is respectively higher that the first, due thresholds 2420, 2440. The overdue thresholds indicate a number of processing runs when maintenance is overdue.

The controller 10 is configured to retrieve the thresholds from the configuration file 24 and compare each run counter 2200 to a respective due and overdue threshold. When the instrument run counter 220 has exceeded the instrument due threshold 2420, the controller 10 is configured to trigger a maintenance routine. When the instrument overdue threshold 2422 is exceeded, the controller 10 is configured to lock the automated laboratory instrument 1 to prevent its use until the required maintenance routine is performed.

When a module run counter 2202n has exceeded the module due threshold 2440, the controller 10 is configured to trigger a maintenance routine. When the module overdue threshold 2442 is exceeded, the controller 10 is configured to reduce the available operations of the automated laboratory instrument 1 to limit its use until the required maintenance routine is performed.

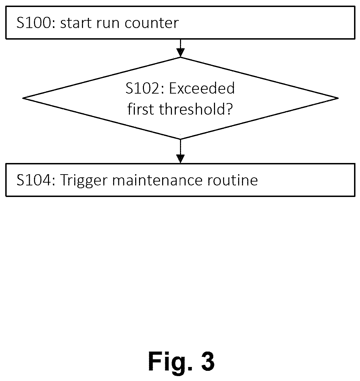

Fig. 3 shows a flow diagram of a method performed by the controller 10 for scheduling preventative maintenance of the automated laboratory instrument 1.

First, in step S100, the controller 1 starts a run counter to monitor a number of processing runs completed by the instrument 1.

In step S102, the controller 1 determines whether the completed number of runs has exceeded a predetermined due threshold (e.g., retrieved from the configuration file 24 as discussed above).

When the number of runs has exceeded the predetermined due threshold, the controller proceeds to set S104 to trigger the maintenance routine, e.g., by generating a notification or sending a signal to a remote service. Once the maintenance routine has been performed, the controller 10 is configured to reset the run counter and return to step S100.

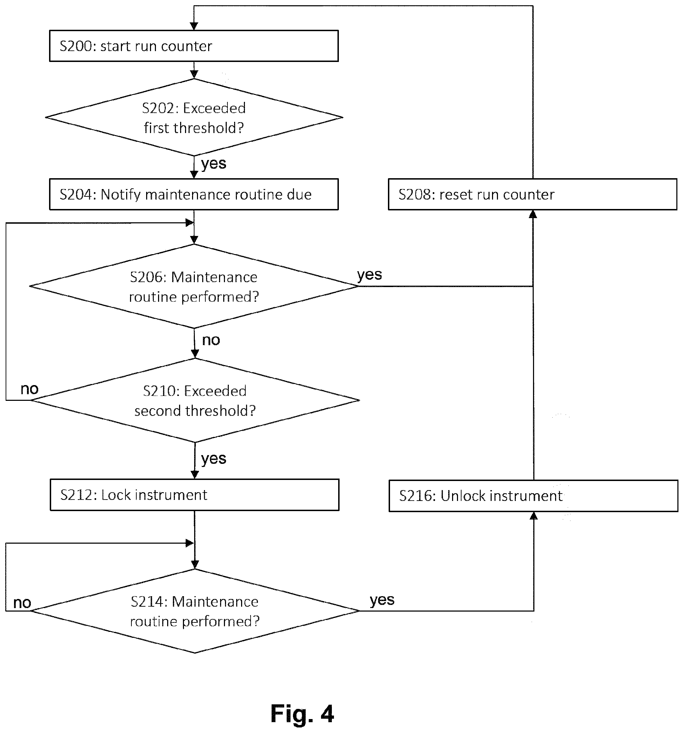

Fig. 4 shows a more detailed flow diagram of a method performed by the controller 10.

At step S200 the controller 10 starts the instrument run counter 2200 which monitors the total number of processing runs completed by the automated laboratory instrument 1.

At step S202 the controller determines if the run counter 2200 has exceeded a first predetermined (due) threshold. When the first predetermined threshold has been exceeded, the controller 10 proceeds to step S204 where the instrument maintenance routine is triggered by generating a notification that the instrument maintenance routine is due.

At step S206 the controller 10 determines if the required maintenance routine has been performed. If it has, then the controller 10 proceeds to step S208 where the run counter 2200 is reset and then returns to step S200. If the required maintenance routine has not been performed, then the controller 10 proceeds to step S208.

At step S208 the controller 10 determines if a second (overdue) predetermined threshold number of runs has been exceeded by the run counter 2200. If the second predetermined threshold has not been exceeded, then the controller 10 repeats steps S206 and S208 until either the maintenance routine has been performed of the second predetermined.

When the second predetermined threshold has been exceeded, the controller 10 proceeds to step S212 where the instrument 1 is locked from further use. Next the controller 10 proceeds to step S214 where it waits until the required maintenance routine is performed. Once the maintenance routine has been performed, the controller unlocks the instrument 1 and proceeds to step S208 to reset the counter 2200 and restart the method.

The controller 10 is configured to perform the same method using each of the module run counters 2202n and respective first and second predetermined module thresholds.

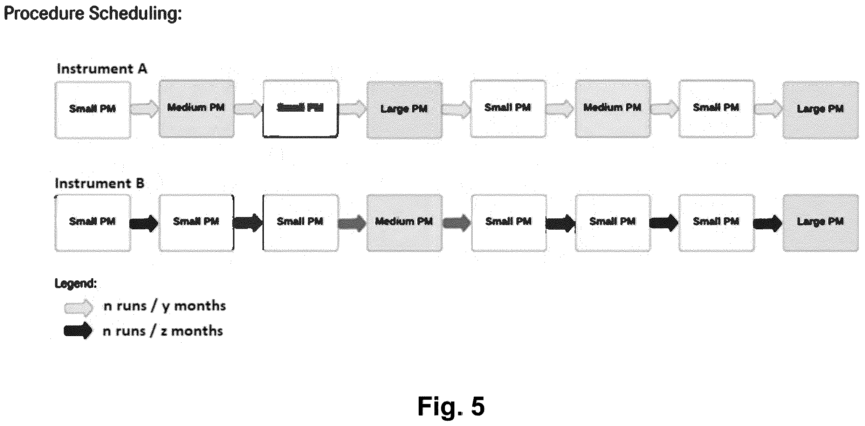

Fig. 5 shows an example schedule for packages of planned maintenance activities. The packages are grouped into packages of procedures according to a level of maintenance to be performed on the instrument 1. In this example, the packages are named Small, Medium and Large packages. The controller 10 is configured to schedule preventative maintenance routines to be performed on the instrument according to e.g., one of schedules shown. The schedule and frequency is run-based and static: e.g., every 100 runs preventative maintenance is needed and one of the maintenance packages becomes due and then overdue.

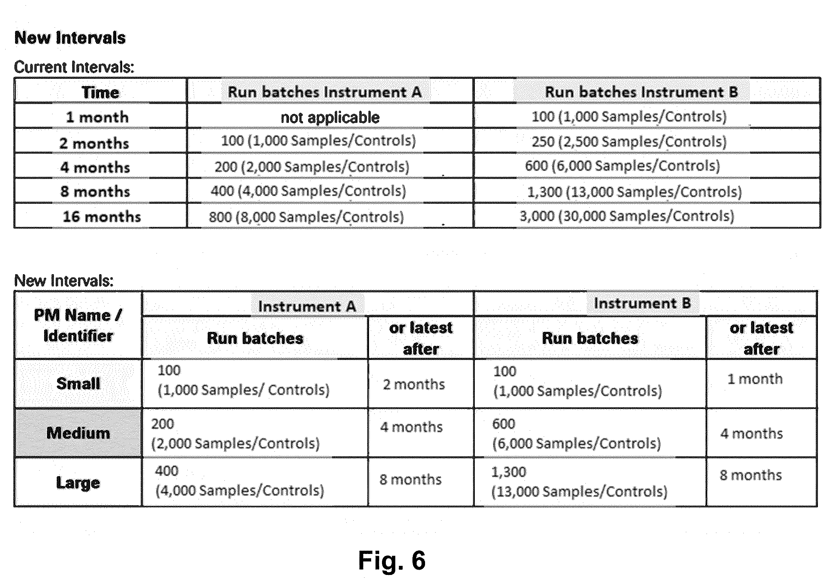

Fig. 6 shows, in the upper table, examples of expected time intervals (i.e., period of time) compared to a number of processing runs for two types of automated laboratory instrument (Instrument A and Instrument B). The lower table of Fig. 6 shows example intervals, in a number of runs, for scheduling each of the maintenance packages to be performed. If a threshold period of time is exceeded before the threshold number of runs is exceeded, then the controller is configured to trigger the scheduled maintenance package.

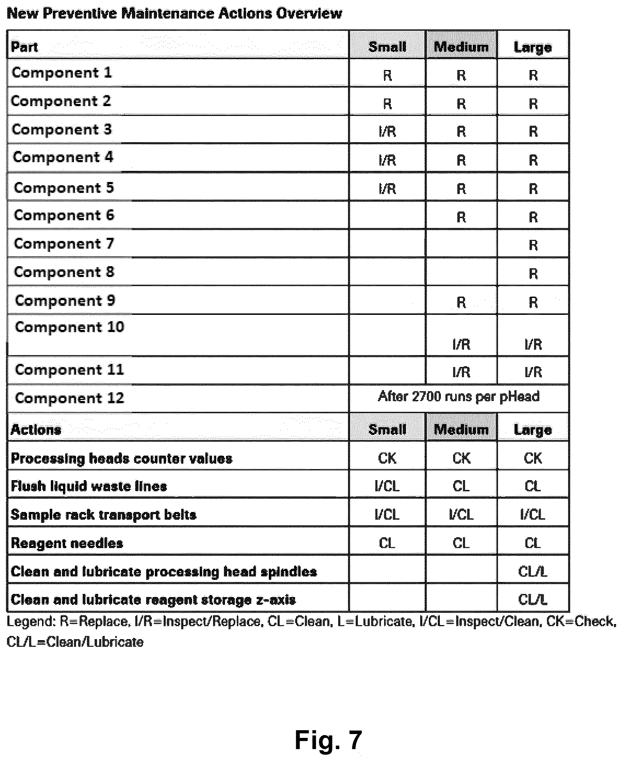

Fig. 7 shows examples of maintenance activities which may be included in each maintenance package. As shown in the table, the maintenance activities may include inspection and/or replacement of parts (e.g., components 1 - 12), as well as cleaning, lubrication, and/or checking actions depending on which package of maintenance activities is scheduled.

For example, fan filters are not required to be replaced in every maintenance. In the small maintenance package, they have to be checked. If their condition appears good, they do not have to be replaced. However, replacement is required in the medium and large maintenance packages. Furthermore, actions for flushing liquid waste lines, cleaning sample rack transport belts, and cleaning and lubricating of reagent storage are included.

In order to schedule each of these activities, the following run counters are used.

### Instrument Level Run Counter:

- Run counter for the whole instrument 1 to schedule and trigger recurrent preventive maintenance packages.
- Unit of measurement: completed run at instrument level.

### Module Level Run Counters - Processing Module A

- Run counter for the p-Head front
- Unit of measurement: completed runs executed by the p-Head front.
- Run counter for the p-Head rear
- Unit of measurement: completed runs executed by the p-Head rear.

### Module Level Run Counters - Processing Module B

- Run counter for the p-Head front
- Unit of measurement: completed runs executed by the p-Head front.
- Run counter for the p-Head rear
- Unit of measurement: completed runs executed by the p-Head rear.

An important limiting factor for triggering preventive maintenance packages is the sample heads (e.g., pipette heads or "p-heads" of the instrument 1). The amount of use of the sample heads defines how often the instrument maintenance shall be performed. Therefore, run based maintenance, which counts the number of runs since the last preventive maintenance as disclosed herein, is particularly suited for when load balancing of the sample heads (e.g., modules 14n) is implemented and so it may be assumed that the usage of each individual sample head is comparable (to the usage of the other sample heads).

Predetermined thresholds for each counter and corresponding factors considered in determining each threshold are discussed herein.

As mentioned above, two thresholds for each counter are defined in order to trigger a corresponding maintenance routine. For example, triggering a maintenance routine may comprise generating a notification configured to inform a user about the current state of the maintenance actions and the necessary following steps. The values of the thresholds are static and specified in a configuration file as discussed above. Accordingly, the thresholds may be changed using a software update with very low impact.

Each of the two thresholds correspond to two corresponding maintenance states that an asset of the instrument can enter: "due" and "overdue".

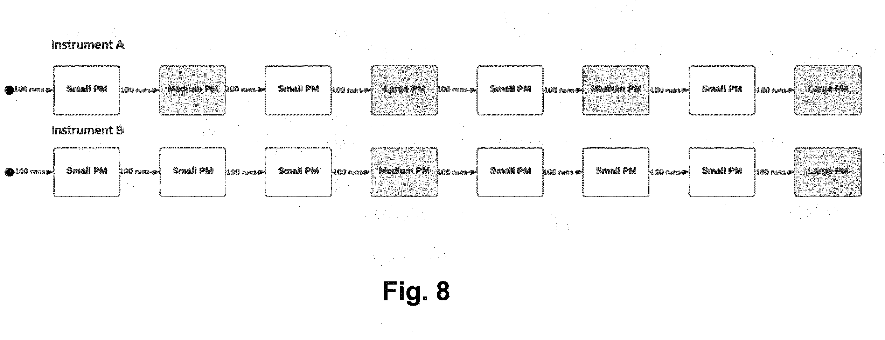

Fig. 8 shows examples of predetermined overdue thresholds and an execution sequence for the preventive maintenance packages for two different automated laboratory instruments. In this example, the overdue threshold for performing preventative maintenance is 100 runs since the last maintenance package was performed for each of the instrument types.

The use of load balancing between modules 14n enables the controller 10 to effectively balance the use of redundant modules 14n. For examples, if the instrument 1 includes redundant modules 14n which are not used at full capacity the modules 14n used can be alternated. Additionally, if a planned processing run determined by the workflow manager 20 is not full, then redundant units (e.g., sample head) within the same module 14n may be alternated.

An effect of the load balancing is the balancing of occurrences of the maintenance activities being performed on each of the modules 14n (and units within those modules 14n). This promotes the co-occurrence of module 14n (e.g., p-Head) and instrument 1 maintenance package needs. For example, in the case of full processing runs, the module 14n (e.g., p-Head) maintenance activities may each reach the overdue state concurrently to the large package instrument maintenance in both the instruments. As a result, the instrument 1 may be subject to less overall down time.

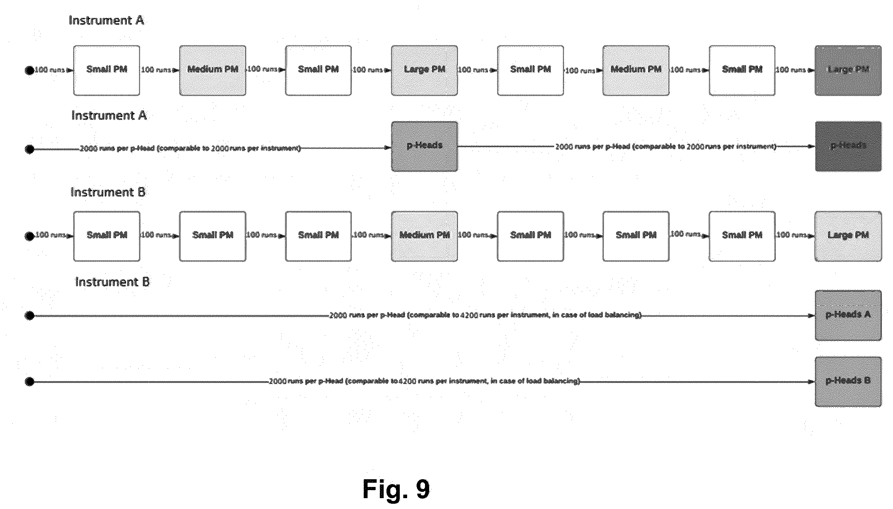

This concept is illustrated in Fig. 9 which shows example maintenance intervals for performing instrument maintenance routines and module (e.g., p-heads) maintenance routines which coincide, owing to the choice of predetermined overdue thresholds for triggering the respective maintenance routines.

A definition of a predetermined due threshold is needed for each counter defined of the run counters 220. An approach to the defining each threshold includes the following steps:
1. Determine an interval range of tolerance for the maintenance to be performed for average, low and high throughput use of the instrument 1
2. Determine an interval range of tolerance for the maintenance to be performed for average, low and high throughput use of a module or unit of a module (e.g., p-Head maintenance)
3. Assign thresholds based on the interval ranges which preferably result in module maintenance and instrument maintenance package concurrence

The interval ranges of tolerance may be determined based on historical use of the instrument 1. The following table shows examples maintenance interval values for low, average, and high instrument throughput for two different instruments.

| **Due value settings for preventive maintenance packages** | **Instrument A Counter for maintenance packages** | **Instrument B Counter for maintenance packages** |
|---|---|---|
| Due maintenance value based on an average throughput case | 100 runs | 80 runs |
| Due maintenance value based on a high throughput case | 80 runs | 40 runs |
| Due maintenance value based on a low throughput case | 110 runs | 105 runs |

For example, a static value for the first predetermined threshold may then be set to be between the interval number of runs for the low and average throughput, (e.g., 80 runs for Instrument A).

The default values for the due threshold applied to the module maintenance counters for may also be determined based on historical usage data and hypothetical calculations. Preferably, the module 14n maintenance due value is defined to facilitate the co-occurrence of module 14n maintenance with instrument 14n maintenance packages.

Assuming the instrument maintenance packages will be executed between the instrument due threshold (e.g.,80 runs) or close to the instrument overdue threshold (e.g., 100 runs), module maintenance may be schedules (using the module due threshold) so occur for example, every 4^{th} or 8^{th} instrument maintenance package.

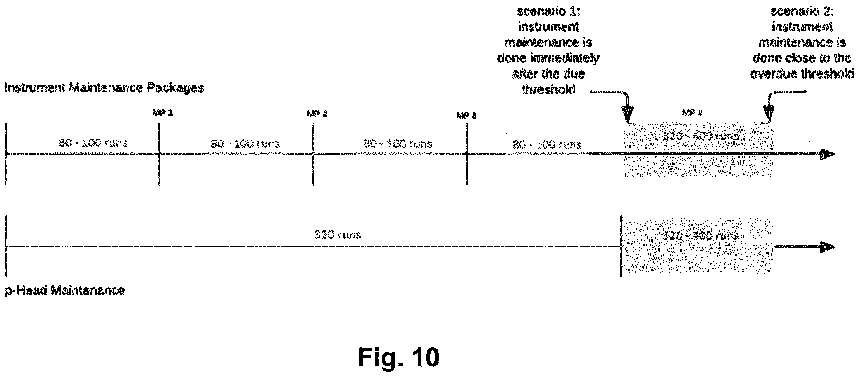

Fig. 10 shows a comparison between instrument maintenance and module (p-head) maintenance and where co-occurrence may be possible. The module maintenance is configured to be performed every 4^{th} instrument maintenance package. A possible region of co-occurrence of the maintenance activities is represented by the grey box.

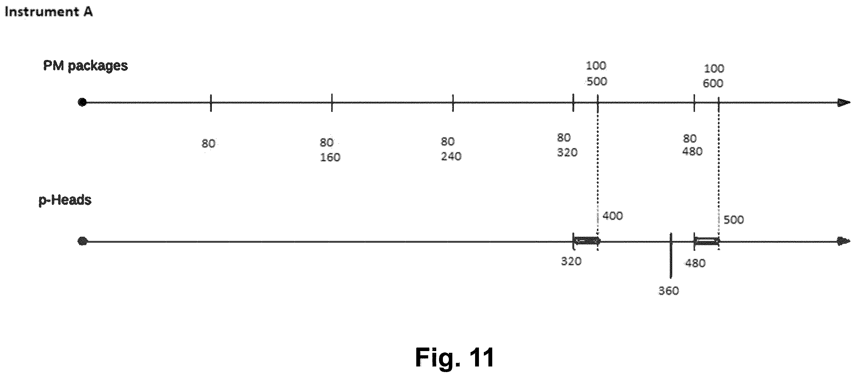

Fig. 11 shows a diagram of an example maintenance schedule for an automated laboratory instrument.

In this example, the instrument due threshold occurs every 80 runs (see vertical lines) and the maintenance overdue threshold occurs at 100 runs (see vertical dotted lines). A grace period (represented by the grey boxes) between each due and overdue threshold represents a period when maintenance may begin. Preferably, the module due (and overdue) threshold is configured to fall into this grace period between a due and overdue thresholds so that the required maintenance activities may be performed during a single downtime session.

In this example, the module (p-Head) maintenance overdue value is set to 360 runs (see the vertical grey line). A second interval (i.e., grace period) is located shortly after the overdue event for the module (i.e., p-Head).

If a preventive maintenance action becomes due, for example, when one of the run counters 220 exceeds a respective predetermined due threshold, the controller 10 is configured to trigger a corresponding maintenance routine, e.g., by displaying a message on the Ul 12.

For example, the message may inform a user that a service visit is due or request the user to arrange a service appointment within e.g., the next 2 weeks. The message may also indicate that otherwise the instrument 1 will soon not allow the initiation of any further runs.

Additionally, the UI 12 may provide information about the preventive maintenance run counters and necessary actions relating to these including, for example, counter reset, threshold increase, edit values, etc. The message may state which threshold of the respective counter has been exceeded and, if the due threshold has been exceeded, how many more runs (i.e., grace period) may be executed until the corresponding overdue value is exceeded.

The user set up an appointment in order to ensure the execution of the preventive maintenance action corresponding to the notification. In case of remote service, the automated laboratory instrument may also be able to pass a warning and/or alarm for preventive maintenance actions to a remote service.

If the instrument or a module run counter exceeds the respective overdue threshold, the controller 10 is configured to lock the instrument 1 prevent it from executing any further runs. The instrument 1 is configured to enter a stopping status, and finish any previously started runs. Once the instrument 1 has finished executing the remaining runs, it is configured to enter an error status. When the instrument 1 is in the error status it is configured to illuminate a (red) status light and/or display a (red) hardware notification on the UI 12.

In other examples, if the instrument 1 or a module 14n counter exceeds a respective overdue threshold, and there are scheduled runs to be executed the instrument 1 can enter a reduced-throughput mode, wherein the instrument 1 will continue to execute the scheduled runs (after rescheduling the runs).

In some examples, if the instrument 1 enters the due or overdue state, the user may extend the grace period, by increasing the overdue threshold. If the instrument 1 connected is connect to a remote service is possible, then as soon as a maintenance activity (e.g., module or instrument level) enters the due state, a dedicated extension button may be enabled on the UI 12. Upon actuation of the extension button, extension of the grace period may be enabled thus preventing locking of the instrument e.g., during urgent need. However, if the instrument 1 is not connected to a remote service then the grace period cannot be extended nor can be the instrument 1 be unlocked until the required maintenance is performed.

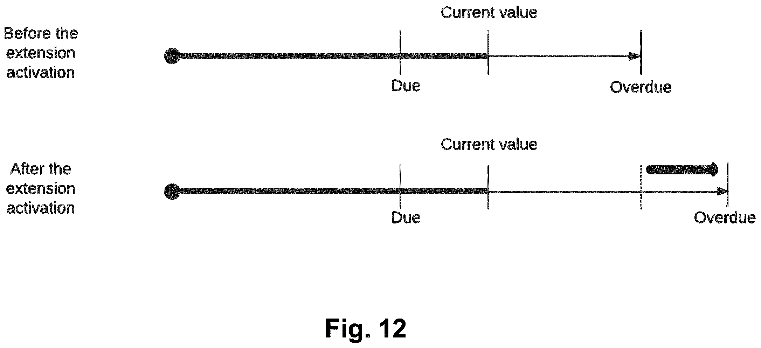

At any point in time between due and overdue events, the extension button may be pressed to postpone the overdue threshold by a fixed number of runs (e.g., 50 runs). A visualization of this concept is shown in Fig. 12.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. An automated laboratory instrument for analysing biological samples, the automated laboratory instrument comprising a controller for coordinating the automated laboratory instrument,
wherein the controller is configured to:
cause the automated laboratory instrument to execute one or more processing runs, each processing run comprising one or more protocols to carry out on each of the biological samples;
monitor a total number of processing runs completed by the laboratory instrument; and
trigger an instrument maintenance routine to be performed on the automated laboratory instrument when the total number of processing runs exceeds a predetermined run threshold.

2. The automated laboratory instrument of claim 1, wherein each processing run is assigned to and performed by a module of the automated laboratory instrument, the automated laboratory instrument comprising a plurality of modules;
wherein the controller is configured to monitor a respective number of processing runs completed by each module, and when the respective number of processing runs exceeds a predetermined module run threshold, trigger a module maintenance routine to be performed on that module.

3. The automated laboratory instrument of claim 2 wherein each module comprises one or more pipette heads of the laboratory instrument.

4. The automated laboratory instrument of any preceding claim wherein triggering the instrument maintenance routine, and/or optionally each module maintenance routine, comprises one or more of: generating a user notification indicating that maintenance is due, starting an automated maintenance routine, and/or transmitting a notification to a remote service.

5. The automated laboratory instrument of any preceding claim wherein the controller is configured to reset the monitored number of processing runs upon detecting that the respective maintenance routine has been performed.

6. The automated laboratory instrument of any preceding claim wherein the or each predetermined run threshold is a first predetermined run threshold, and the controller is further configured to:
determine when the total or respective number of processing runs has exceeded a second predetermined run threshold which is higher than the first predetermined run threshold, and
prevent or reduce operation of the automated laboratory instrument until the triggered maintenance routine is performed.

7. The automated laboratory instrument of claim 6, wherein:
after determining that the first predetermined run threshold is exceeded, the controller is configured to request an extension key from a remote service upon detecting a user request for an extension, and
use the extension key to increase the second predetermined run threshold.

8. The automated laboratory instrument according to any preceding claim wherein the or each predetermined run threshold is a static value retrievable from a configuration file of the automated laboratory instrument.

9. The automated laboratory instrument of any preceding claim wherein the predetermined run threshold is determined based on historical performance information recorded when the automated laboratory equipment is subject to low and average throughputs,
wherein the or each predetermined run threshold is selected from a range defined by:
a historical number of runs completed between subsequent maintenance routines when the automated laboratory equipment is subject to a low throughput, and
the historical number of runs completed between subsequent maintenance routines when the automated laboratory equipment is subject to an average throughput.

10. The automated laboratory instrument according to any of claims 2 to 9 wherein each predetermined module threshold is configured to be exceeded when the predetermined run threshold is exceeded such that the triggering of each module maintenance routine coincides with the triggering of the instrument maintenance routine.

11. The automated laboratory instrument of any preceding claim wherein the instrument maintenance routine is one of a plurality of instrument maintenance routines selectable by the controller, each instrument maintenance routine corresponding to a respective level of maintenance to be performed,
wherein higher level maintenance routines include a higher number of maintenance activities and/or require larger amounts of time and/or resources to perform than lower level maintenance routines,
wherein the controller is configured to select the instrument maintenance routine for triggering based on a schedule of instrument maintenance routines.

12. The automated laboratory instrument of claim 11 wherein the schedule of instrument maintenance routines is configured to ensure that a higher level maintenance routine of the plurality of instrument maintenance routines is performed only after one or more lower level maintenance routines have been performed.

13. The automated laboratory instrument of claims 11 or 12 wherein the plurality of maintenance routines includes at least:
a lower level maintenance routine which includes checking an instrument asset, and
a higher level maintenance routine which includes replacing said instrument asset.

14. A computer-implemented method of triggering maintenance of an automated laboratory instrument,
the automated laboratory instrument being configured to execute one or more processing runs, each processing run comprising one or more protocols to carry out on each of the biological samples,
wherein the method comprises:
monitoring a total number of processing runs completed by the laboratory instrument, and
triggering an instrument maintenance routine to be performed on the automated laboratory instrument when the total number of processing runs exceeds a predetermined run threshold.

15. A computer-readable medium comprising instructions which when executed by a computer, cause the computer to perform the computer-implemented method of claim 14.
